# DEMANDE DE BREVET EUROPEEN

(11) **EP 3 633 583 A1**
(43) Date de publication de la demande: **08.04.2020**
(21) Numéro de dépôt: 19306268.4
(22) Date de dépôt: 02.10.2019
(51) Int. Cl.: G06Q 30/06

(54) **PROCÉDÉ DE CRÉATION DE GROUPES DE PARTICIPANTS POUR RÉALISER UNE ACTIVITÉ**

(30) Priorité: 05.10.2018 FR 1859262
(71) Demandeur: Metias, Samuel, 92700 Colombes (FR); Tollin de Rivarol, Florent, 92400 Courbevoie (FR); Mohtacham, Damien Pouya, 75020 Paris (FR)
(72) Inventeur: Metias, Samuel, 92700 Colombes (FR); Tollin de Rivarol, Florent, 92400 Courbevoie (FR); Mohtacham, Damien Pouya, 75020 Paris (FR)
(74) Mandataire: Gauchet, Fabien Roland

(57) **Abrégé**

Le procédé de création (1) de groupes de participants pour une activité depuis un ensemble de requêtes (2) et un ensemble d'offres d'activités (4) comporte des étapes de :
a) Déterminer (10) un ensemble de paires formées chacune d'une requête de l'ensemble de requêtes et d'une offre compatible de l'ensemble d'offres ; puis,
b) Déterminer (20) une matrice, symétrique, de couples formés de deux paires issues de l'ensemble de paires déterminé précédemment et compatibles l'une avec l'autre ; puis,
c) Projeter (30) sur une période de temps prédéterminée les couples de la matrice de couples précédemment déterminée ; puis,
d) Déterminer (40) un ensemble de groupes potentiellement réalisables à partir de la projection précédente ; puis,
e) Optimiser (50) l'ensemble de groupes potentiellement réalisables précédemment déterminé pour obtenir un ensemble de groupes optimaux de participants (60) pour chacune des offres de l'ensemble des offres d'activités dans la période de temps prédéterminée.

## Description

### DOMAINE TECHNIQUE DE L'INVENTION

L'invention concerne un procédé de création de groupes de participants pour réaliser une activité.

### ETAT DE LA TECHNIQUE ANTERIEURE

Actuellement, les réseaux sociaux sont structurés et fonctionnent de manière à mettre en relation des participants les uns avec les autres. Une fonction de ces réseaux sociaux est de suggérer à un participant une liste de personnes inscrites qui seraient susceptibles de l'intéresser. Pour cela, les réseaux sociaux établissent une telle liste sur un ensemble de critères préalablement renseignés par les différents participants. Toutefois, les réseaux sociaux ne sont pas capables de proposer des groupes de participants formés dans le but de réaliser une activité donnée à un moment donné.

### EXPOSE DE L'INVENTION

Un but de l'invention est de fournir un procédé de création de groupes de participants pour réaliser une activité donnée, de manière simple et rapide tout en traitant un très grand nombre de données au sein d'un réseau social.

A cette fin, il est prévu, selon l'invention, un procédé de création d'un ensemble de requêteurs destiné à être mis en œuvre dans un serveur de type comprenant un processeur, une mémoire comportant une base de données et en communication avec le processeur, des moyens de communication en liaison avec le processeur à partir d'un ensemble de requêtes enregistré dans la base de données, chaque requête étant associée à un requêteur déterminé, et d'un ensemble d'enregistrements d'informations enregistré dans la base de données, chaque enregistrement d'informations étant susceptible de répondre à une requête de l'ensemble de requêtes, le procédé comportant des étapes successives de :
a) Déterminer un ensemble de paires formées chacune d'une requête de l'ensemble de requêtes et d'un enregistrement d'informations compatible de l'ensemble d'enregistrements d'informations ; puis,
b) Déterminer une matrice, symétrique, de couples formés de deux paires issues de l'ensemble de paires déterminé précédemment et compatibles l'une avec l'autre ; puis,
c) Projeter sur une période de temps prédéterminée les couples de la matrice de couples précédemment déterminée ; puis,
d) Déterminer un ensemble de groupes potentiellement réalisables à partir de la projection précédente ; puis,
e) Optimiser l'ensemble de groupes potentiellement réalisables précédemment déterminé de sorte à obtenir un ensemble de groupes optimaux de requêteurs pour chacun des enregistrements d'informations de l'ensemble des enregistrements d'informations dans la période de temps prédéterminée.

Avantageusement, mais facultativement, le procédé de création de groupes de participants selon l'invention présente au moins l'une des caractéristiques techniques suivantes :
- lors de l'étape a), l'ensemble de paires est obtenu par un produit cartésien entre l'ensemble de requêtes et l'ensemble d'enregistrements d'informations sur lequel est appliquée une première série de conditions de compatibilité ;
- lors de l'étape b), la matrice de couples est obtenue par un produit cartésien de l'ensemble de paires avec lui-même sur lequel est appliquée une deuxième série de conditions de comptabilité ;
- préalablement à l'étape c) et suite à l'étape b), le procédé comporte une étape de réorganisation de la matrice de couples en un ensemble de pivots associés chacun à une série de candidats compatibles, chaque pivot étant une paire de l'un de la ligne et de la colonne de la matrice de couples, et chaque candidat étant une paire de l'autre de la ligne et de la colonne de la matrice de couples, compatible avec le pivot ;
- sont retirés de l'ensemble de pivots associés chacun à une série de candidats compatibles les pivots et leurs candidats compatibles associés dont le nombre est inférieur à un nombre minimal de requêteurs à l'enregistrement d'informations du pivot considéré ;
- l'étape c) revient à projeter sur la période de temps prédéterminée les pivots et leurs candidats compatibles associés ;
- lors de l'étape d), les groupes potentiellement réalisables sont formés des paires ayant des disponibilités communes dans la période de temps prédéterminée ;
- pour une offre considérée, les groupes potentiellement réalisables ayant un nombre de paires inférieur à un nombre minimal de requêteurs à l'enregistrement d'informations considéré sont retirés de l'ensemble de groupes potentiellement réalisables ; et,
- l'étape e) comporte des sous étapes de :
   ∘ Association d'un indice de performance à chacune des paires des groupes potentiellement réalisables ;
   ∘ Détermination de l'indice de performance de chaque paire par un solveur à partir d'un ensemble de contraintes prédéfinies ;
   ∘ Maximisation des indices de performance déterminés précédemment pour chacun des groupes potentiellement réalisables pour ne conserver que les groupes optimaux.
- chaque requêteur est un participant désirant réaliser une activité, chaque requête de l'ensemble de requêtes est une requête de participant et chaque enregistrement d'information de l'ensemble d'enregistrements d'informations est une offre d'activité à réaliser.

### BREVE DESCRIPTION DES FIGURES

D'autres caractéristiques et avantages de l'invention ressortiront à la lecture de la description qui suit d'un mode de réalisation de l'invention. Aux dessins annexés :
- la figure 1 est un organigramme des étapes d'un procédé de création de groupes selon un mode de réalisation de l'invention ; et,
- la figure 2 est une vue de la matrice symétrique obtenue lors d'une étape du procédé de la figure 1.

### DESCRIPTION DETAILLEE D'UN MODE DE REALISATION

En référence aux figures, nous allons décrire un procédé de création de groupes 1 selon l'invention mis en œuvre au sein d'un service de mise en relation de personnes inscrites de type réseau social. Le procédé de création de groupe 1 selon l'invention est destiné à être mis en œuvre au sein d'un serveur du type comportant un processeur, une mémoire comportant une base de données et en communication avec le processeur, ainsi que des moyens de communication en liaison avec le processeur. La base de données comporte deux ensembles de données d'entrée : le premier ensemble de données d'entrée est un ensemble de requêtes 2, et le deuxième ensemble de données d'entrée est un ensemble d'enregistrements d'informations 4 susceptibles de répondre à une requête de l'ensemble de requêtes 2. L'ensemble de requêtes 2 est alimenté par des requêteurs via des premiers terminaux en communication avec le serveur via les moyens de communication de ce dernier. De manière similaire, l'ensemble d'enregistrements d'informations 4 est alimenté via des deuxièmes terminaux en communication avec le serveur via les moyens de communication de ce dernier. Par exemple, les premiers terminaux peuvent être des téléphones mobiles, comme des smartphones, ou encore des ordinateurs portables ou fixes. Il en est de même pour les deuxièmes terminaux.

Le procédé de création de groupes 1 selon l'invention va être par la suite décrit en relation avec une application particulière donnée ici comme exemple non limitatif. Pour illustrer le propos avec cette application particulière, le procédé de création de groupes 1 selon l'invention reçoit donc deux ensembles de données d'entrée enregistrés dans une base de données. Le premier ensemble de données d'entrée est un ensemble de requêtes de participants 2. Pour chacune des requêtes de participants (RP) de l'ensemble de requêtes de participants 2 est associé un certain nombre d'informations suivantes :
- Un identifiant de la requête de participant (IdR)
- Un identifiant du participant (IdP)
- Un ensemble d'identifiants de communautés du participant (IdCP)
- Un ensemble d'identifiants de communautés souhaitées (IdCQ)
- Un identifiant de l'activité souhaitée (IdAP)
- Des plages horaires du participant (PHP) : date fixe, créneaux, indisponibilités pour réaliser l'activité souhaitée par le participant
- Un périmètre dans lequel le participant souhaite réaliser l'activité souhaitée : cela peut être la distance autour de la position GPS du participant
- Un ensemble d'identifiants d'offres choisies dans le périmètre précédent (IdOC)

Le deuxième ensemble de données d'entrée est un ensemble d'offres d'activités 4 à réaliser. Les offres d'activités sont fournies par des fournisseurs d'activités dans des domaines divers comme, en particulier mais non limitatif, les sports et loisirs. Pour chacune des offres d'activités (OF) de l'ensemble des offres d'activités 4 est associé un certain nombre d'informations suivantes :
- Un identifiant de l'offre d'activité (IdO)
- Un identifiant de l'activité (IdAO)
- La position, sous la forme de coordonnées GPS par exemple, de l'offre
- La durée de l'offre d'activité
- Un identifiant de communauté de l'offre (IdCO)
- Les plages horaires de l'offre (PHO)
- Les nombres minimal et maximal de participants pour l'offre

A partir de ces deux ensembles de données d'entrée, le procédé de création de groupes 1 selon l'invention va dans un premier temps réduire le nombre de données à traiter. En effet, à un instant t, lors de la mise en œuvre du procédé de création de groupes 1 selon l'invention, la quantité de données au sein des deux ensembles de données d'entrée est très volumineuse ce qui allongerait le temps nécessaire à l'élaboration de groupes optimaux pouvant réaliser les offres d'activités alors disponibles.

Ainsi, dans une première étape 10, le procédé de création de groupes 1 selon l'invention détermine un ensemble de paires {RP;OF} formées chacune d'une requête de participant RP de l'ensemble de requêtes de participants 2 et d'une offre d'activité OF de l'ensemble d'offres d'activités 4. Pour cela, le procédé de création de groupes 1 selon l'invention réalise, lors de cette première étape, un produit cartésien entre l'ensemble des requêtes de participants 2 et l'ensemble des offres d'activités 4 de sorte à déterminer un premier ensemble de paires {RP;OF} sous la forme, par exemple, d'un tableau associatif. Les paires {RP;OF} retenues et conservées remplissent une première série de conditions de compatibilité suivantes :
- IdCO ∈ (IdCQ, IdCP) : la communauté de l'offre d'activité correspond à l'une des communautés du participant ou à l'une des communautés choisies par le participant ;
- IdO ∈ IdOC : l'offre d'activité OF est l'une des offres d'activités choisies par le participant dans le périmètre du participant ;
- IdAO=IdAP : l'activité de l'offre d'activité OF est l'activité souhaitée par le participant dans sa requête RF considérée ;
- PHP ∩ PHO ≥ Durée activité : les plages horaires du participant et de l'offre d'activité se recouvrant ont une durée supérieure ou égale à la durée de l'offre d'activité considérée.

Cela permet de réaliser une première réduction de la quantité de données à traiter afin de réaliser des groupes.

Ensuite, dans une deuxième étape 20, le procédé de création de groupes 1 selon l'invention détermine une matrice symétrique comportant des couples formés de deux paires {RP;OF} issues de l'ensemble de paires {RP;OF} déterminé lors de l'étape 10. Pour cela, le procédé de création de groupes 1 selon l'invention effectue un produit cartésien entre les paires {RP;OF} de l'ensemble de paires {RP;OF} issu de l'étape précédente 10 de sorte à déterminer un deuxième ensemble de couples de paires {RP;OF} sous la forme d'une matrice symétrique. Les couples [{RP;OF}ᵢ;{RP;OF}ⱼ], encore notés {RP;OF}_{i,j}, de paires {RP;OF} qui sont retenus remplissent une deuxième série de conditions de compatibilité suivantes :
- IdO({RP;OF}ᵢ)=IdO({RP;OF}ⱼ) : l'offre d'activité OF de la paire i est la même que l'offre d'activité OF de la paire j ;
- IdAO({RP;OF}ᵢ)=IdAO({RP;OF}ⱼ) : l'activité de l'offre d'activité OF de la paire i est la même que l'activité de l'offre d'activité OF de la paire j ;
- IdP({RP;OF}ᵢ)≠IdP({RP;OF}ⱼ) : le participant de la requête de participant RP de la paire i n'est pas celui de la requête de participant RP de la paire j ;
- IdC*P*({RP;OF}*ᵢ*) ∩ IdCQ({RP;OF}*ⱼ*) ≠ 0 : il y a au moins une communauté commune entre les communautés du participant de la requête de participant RP de la paire i et les communautés souhaitées du participant de la requête de participant RP de la paire j ;
- *IdCP*({*RP; OF*}*ᵢ*) ∩ *IdCQ*({*RP; OF*}*ᵢ*) ≠ 0 : de même, inversement, il y a au moins une communauté commune entre les communautés du participant de la requête de participant RP de la paire j et les communautés souhaitées du participant de la requête de participant RP de la paire i.
où i et j varient entre 1 et n, n étant le nombre de paires {RP;OF} dans l'ensemble de paires {RP;OF} déterminé lors de l'étape 10.

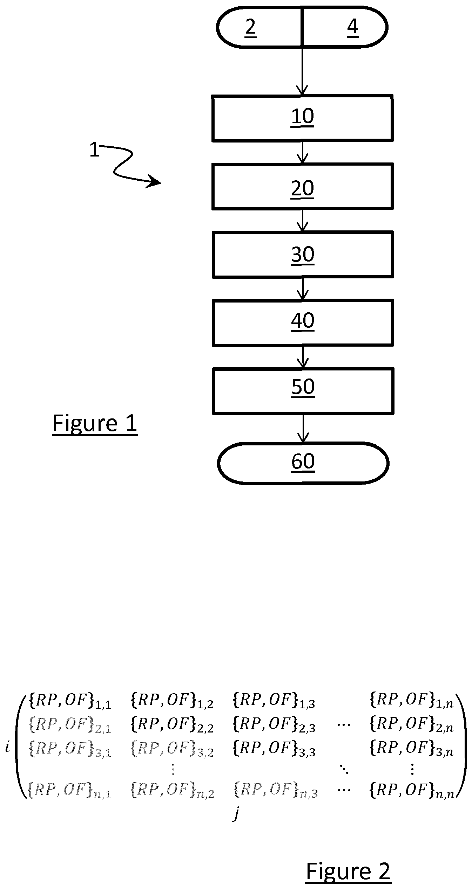

Le résultat de l'étape 20 qui vient d'être décrite est une matrice symétrique telle qu'illustrée à la figure 2. La symétrie de la matrice vient du fait que le couple {RP;OF}_{i,j} est identique au couple {RP;OF}_{j,i}. Ceci permet de ne conserver qu'une moitié des éléments de la matrice symétrique. Au surplus, les couples {RP;OF}_{i,i} sont conservés de manière implicite du fait que la paire {RP;OF}ᵢ est compatible avec elle-même.

Ensuite, dans une étape intermédiaire, le procédé de création de groupes 1 selon l'invention réorganise les paires des couples conservés de la matrice symétrique précédemment déterminée lors de l'étape 20 par paires {RP;OF}ᵢ des lignes (ou {RP;OF}ⱼ des colonnes) de ladite matrice symétrique qui deviennent alors des pivots, auxquels sont associées les paires {RP;OF}ⱼ des colonnes compatibles (resp. {RP;OF}ᵢ des lignes) qui deviennent des candidats du pivot considéré. Par exemple, dans le cas des pivots choisis selon les lignes i de la matrice symétrique, cela donne :
[Pivot({RP;OF}ᵢ), Candidats ({RP;OF}ᵢ₊₁,..., {RP;OF}ⱼ,..., {RP;OF}ₙ)] où j, ici, ne varie plus qu'entre i+1 et n.

De nouveau, seuls sont conservés les pivots et candidats restants associés qui remplissent la condition de conservation suivante : le nombre minimal de participants pour l'offre d'activité OF du Pivot({RP;OF}ᵢ) ≤ au nombre de candidats restants ({RP;OF}ᵢ₊₁,..., {RP;OF}ⱼ,..., {RP;OF}ₙ) associés.

Il en ressort un sous tableau associatif.

Dans une troisième étape 30, le procédé de création de groupes 1 selon l'invention va projeter sur une période de temps prédéterminée les couples {RP;OF}_{i,j} restants de la matrice de couple issue de l'étape 20. En particulier, le procédé de création de groupes 1 selon l'invention va projeter sur la période de temps prédéterminée les paires {RP;OF} des couples {RP;OF}_{i,j} restants.

Dans un mode de réalisation de cette étape 30, le procédé de création de groupes 1 selon l'invention détermine les fuseaux horaires des différentes offres d'activités OF des paires {RP;OF} des couples {RP;OF}_{i,j} restants à partir des données de position, comprenant des données GPS par exemple, de l'offre d'activité OF considérée. Cela permet de réaliser un classement/regroupement des lignes du sous tableau associatif issu de l'étape intermédiaire précédente, par fuseaux horaires.

Ensuite, toujours dans un mode de réalisation de l'étape 30, le procédé de création de groupes 1 selon l'invention détermine les disponibilités de chacun des Pivot({RP;OF}ᵢ) du sous tableau associatif à partir des données de plages horaires PHO de l'offre d'activité OF du Pivot({RP;OF}ᵢ) considéré pour la période de temps prédéterminée. Par exemple, la période de temps prédéterminée est découpée en intervalles de temps donné successifs numérotés de 0 à m. Seuls les numéros d'intervalles (N°IP) correspondant aux données de plages horaires PHO de l'offre d'activité OF du Pivot({RP;OF}ᵢ) considéré sont conservés, et ce pour chacun des Pivot({RP;OF}ᵢ) du sous tableau associatif.

Ensuite, toujours dans un mode de réalisation de l'étape 30, le procédé de création de groupes 1 selon l'invention projette sur la période de temps prédéterminée les disponibilités de chacun des Candidat({RP;OF}ⱼ) associés au Pivot({RP;OF}ᵢ) considéré à partir des données de plages horaires du participant PHP de la requête de participant RP dudit Candidat({RP;OF}ⱼ) : de nouveau, seuls les numéros d'intervalles (N°IC) correspondant aux données de plages horaires du participant PHP sont conservés.

Puis une fois la projection sur la période de temps prédéterminée réalisée, dans une étape 40 suivante, le procédé de création de groupes 1 selon l'invention détermine un ensemble de groupes potentiellement réalisables à partir de la projection réalisée à l'étape 30. Pour cela, le procédé de création de groupes 1 selon l'invention ne va, pour chacune des lignes du sous tableau associatif, c'est-à-dire pour chaque Pivot({RP;OF}ᵢ), conserver que les Candidats({RP;OF}ⱼ) du Pivot({RP;OF}ᵢ) qui ont des intervalles en commun, soit : N°IC∩N°IP°≠0 et si le nombre d'intervalles adjacents au N°IC retenu est supérieur ou égal à la durée de l'offre d'activité OF du Pivot({RP;OF}ᵢ) considéré, exprimée en nombre d'intervalles.

Il est à noter que, si, lors de cette étape 40, un Pivot({RP;OF}ᵢ) considéré se retrouve sans aucun candidat, ou avec un nombre de candidats inférieur au nombre minimal de participants de l'offre d'activité OF du Pivot({RP;OF}ᵢ), il n'est pas conservé.

A l'issue de cette étape, il reste un ensemble de groupes potentiellement réalisables.

Ensuite, dans une cinquième étape 50, le procédé de création de groupes 1 selon l'invention va optimiser l'ensemble des groupes potentiellement réalisables issu de l'étape 40 précédente de sorte à obtenir une série de groupes optimaux pour chacune des offres d'activités OF de l'ensemble d'offres d'activités 4. Pour cela, lors de cette étape 50 d'optimisation, le procédé de création de groupes 1 selon l'invention utilise un solveur qui est un procédé connu en soi et qui ne sera pas décrit plus en détail ici. Le solveur va appliquer un ensemble de contraintes prédéterminées sur l'ensemble de groupes potentiellement réalisables. De manière préliminaire à l'utilisation du solveur, le procédé de création de groupes 1 selon l'invention élabore une structure/modèle de données de l'ensemble de groupes potentiellement réalisables précédemment déterminé pour permettre l'application de l'ensemble de contraintes prédéterminées par le solveur. Par exemple, cette structure peut se présenter comme suit :

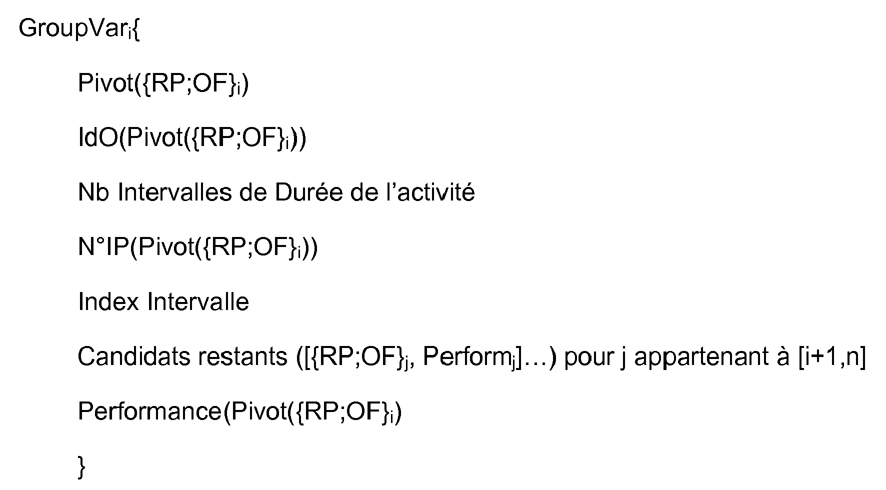

Dans cette structure, la variable Index Intervalle représente le numéro du premier intervalle de la période de temps prédéterminée correspondant au début de l'offre d'activité OF du Pivot({RP;OF}ᵢ) : c'est une variable qui est déterminée et optimisée par le solveur. La variable Performⱼ est une variable binaire associée à un candidat restant {RP;OF}ⱼ du Pivot({RP;OF}ᵢ) qui matérialise la participation du candidat restant considéré, la variable étant déterminée et optimisée par le solveur. La variable Performance(Pivot({RP;OF}ᵢ) obtenue par la somme, sur l'ensemble des Candidats restants {RP;OF}ⱼ du Pivot({RP;OF}ᵢ), des variables Performⱼ associées : cette variable matérialise le nombre effectif optimisé de participants dans le groupe GroupVarᵢ considéré.

Une fois que le solveur a appliqué, sur tous les GroupVarᵢ, l'ensemble des contraintes prédéterminées, le procédé de création de groupes 1 selon l'invention maximise l'ensemble des GroupVarᵢ.Performance(Pivot({RP;OF}ᵢ) pour i allant de 1 à n, permettant de constituer effectivement un ensemble 60 de groupes optimaux de participants pour une offre d'activité OF donnée de l'ensemble des offres d'activités 4.

Parmi l'ensemble de contraintes prédéterminées appliquées par le solveur lors de l'étape 50, il y a :
- chaque GroupVar.Performance(Pivot({RP;OF}ᵢ) doit être supérieur ou égal au nombre minimal -1 de participants de l'offre d'activité OF du Pivot({RP;OF}ᵢ) ;
- de la même manière, GroupVarᵢ.Performance(Pivot({RP;OF}ᵢ) doit être inférieur ou égal au nombre maximal -1 de participants de l'offre d'activité OF du Pivot({RP;OF}ᵢ) ;
- si la variable Perfomⱼ=1, alors il faut qu'il existe au moins un N°IC du candidat {RP;OF}ⱼ associé qui soit compris dans [Index Intervalle, Index Intervalle+durée de l'offre d'activité OF considérée]
- si une requête de participant a déjà été « consommée » par le participant, il ne peut pas la « reconsommer » : il faut vérifier que la somme des Performⱼ des candidats restants {RP;OF}ⱼ ayant le même IdR est inférieure ou égale à 1.
- De même pour les Pivot({RP;OF}ᵢ) ayant le même IdR.
- Si, pour les Pivot({RP;OF}ᵢ) et les candidats restants {RP;OF}ⱼ, il y a deux ou plusieurs requêtes de participants ayant des plages horaires de participant communes, il faut conserver une seule des requêtes sur chacune des plages horaires de participant communes.

En résumé, dans l'application particulière servant d'illustration, le procédé de création de groupes de participants pour réaliser une activité à partir d'un ensemble de requêtes de participants et d'un ensemble d'offres d'activités à réaliser, le procédé comportant des étapes successives de :
a) Déterminer un ensemble de paires formées chacune d'une requête de l'ensemble de requêtes et d'une offre compatible de l'ensemble d'offres; puis,
b) Déterminer une matrice, symétrique, de couples formés de deux paires issues de l'ensemble de paires déterminé précédemment et compatibles l'un avec l'autre ; puis,
c) Projeter sur une période de temps prédéterminée les couples de la matrice de couples précédemment déterminée ; puis,
d) Déterminer un ensemble de groupes potentiellement réalisables à partir de la projection précédente ; puis,
e) Optimiser l'ensemble de groupes potentiellement réalisables précédemment déterminé de sorte à obtenir un ensemble de groupes optimaux de participants pour chacune des offres de l'ensemble des offres d'activités à réaliser dans la période de temps prédéterminée.

Avantageusement, mais facultativement, le procédé de création de groupes de participants selon l'invention présente au moins l'une des caractéristiques techniques suivantes:
- lors de l'étape a), l'ensemble de paires est obtenu par un produit cartésien entre l'ensemble de requêtes et l'ensemble d'offres sur lequel est appliquée une première série de conditions de compatibilité ;
- lors de l'étape b), la matrice de couples est obtenue par un produit cartésien de l'ensemble de paires avec lui-même sur lequel est appliquée une deuxième série de conditions de comptabilité ;
- préalablement à l'étape c) et suite à l'étape b), le procédé comporte une étape de réorganisation de la matrice de couples en un ensemble de pivots associés chacun à une série de candidats compatibles, chaque pivot étant une paire de l'un de la ligne et de la colonne de la matrice de couples, et chaque candidat étant une paire de l'autre de la ligne et de la colonne de la matrice de couples, compatible avec le pivot ;
- sont retirés de l'ensemble de pivots associés chacun à une série de candidats compatibles les pivots et leurs candidats compatibles associés dont le nombre est inférieur à un nombre minimal de participants à l'offre du pivot considéré ;
- l'étape c) revient à projeter sur la période de temps prédéterminée les pivots et leurs candidats compatibles associés ;
- lors de l'étape d), les groupes potentiellement réalisables sont formés des paires ayant des disponibilités communes dans la période de temps prédéterminée ;
- pour une offre considérée, les groupes potentiellement réalisables ayant un nombre de paires inférieur à un nombre minimal de participants à l'offre considérée sont retirés de l'ensemble de groupes potentiellement réalisables ; et,
- l'étape e) comporte des sous étapes de :
   ∘ Association d'un indice de performance à chacune des paires des groupes potentiellement réalisables ;
   ∘ Détermination de l'indice de performance de chaque paire par un solveur à partir d'un ensemble de contraintes prédéfinies ;
   ∘ Maximisation des indices de performance déterminés précédemment pour chacun des groupes potentiellement réalisables pour ne conserver que les groupes optimaux.

Le procédé de création de groupes 1 selon l'invention qui vient d'être décrit en détail permet avant l'élaboration effective des groupes optimaux de réduire au maximum la quantité de données à traiter. Ceci permet lors de la mise en œuvre du procédé de création de groupes 1 selon l'invention à un instant t d'obtenir de manière simple et rapide, pour un participant faisant une requête de participant pour une activité choisie, un groupe optimal de participants sur une des plages horaires du participant associé à une offre d'activité idoine de l'activité choisie.

Bien entendu, il est possible d'apporter à l'invention de nombreuses modifications sans pour autant sortir du cadre de celle-ci.

## Revendications

1. Procédé de création (1) d'un ensemble de requêteurs destiné à être mis en œuvre dans un serveur de type comprenant un processeur, une mémoire comportant une base de données et en communication avec le processeur, des moyens de communication en liaison avec le processeur à partir d'un ensemble de requêtes (2) enregistré dans la base de données, chaque requête étant associée à un requêteur déterminé, et d'un ensemble d'enregistrements d'informations (4) enregistré dans la base de données, chaque enregistrement d'informations étant susceptible de répondre à une requête de l'ensemble de requêtes, le procédé comportant des étapes successives de :
a) Déterminer (10) un ensemble de paires formées chacune d'une requête de l'ensemble de requêtes et d'un enregistrement d'informations compatible de l'ensemble d'enregistrements d'informations ; puis,
b) Déterminer (20) une matrice, symétrique, de couples formés de deux paires issues de l'ensemble de paires déterminé précédemment et compatibles l'une avec l'autre ; puis,
c) Projeter (30) sur une période de temps prédéterminée les couples de la matrice de couples précédemment déterminée ; puis,
d) Déterminer (40) un ensemble de groupes potentiellement réalisables à partir de la projection précédente ; puis,
e) Optimiser (50) l'ensemble de groupes potentiellement réalisables précédemment déterminé de sorte à obtenir un ensemble de groupes optimaux de requêteurs (60) pour chacun des enregistrement d'informations de l'ensemble des enregistrement d'informations dans la période de temps prédéterminée.

2. Procédé selon la revendication 1, **caractérisé en ce que**, lors de l'étape a), l'ensemble de paires est obtenu par un produit cartésien entre l'ensemble de requêtes et l'ensemble d'enregistrements d'informations sur lequel est appliquée une première série de conditions de compatibilité.

3. Procédé selon la revendication 1 ou 2, **caractérisé en ce que**, lors de l'étape b), la matrice de couples est obtenue par un produit cartésien de l'ensemble de paires avec lui-même sur lequel est appliquée une deuxième série de conditions de comptabilité.

4. Procédé selon l'une des revendications 1 à 3, **caractérisé en ce que** préalablement à l'étape c) et suite à l'étape b), le procédé comporte une étape de réorganisation de la matrice de couples en un ensemble de pivots associés chacun à une série de candidats compatibles, chaque pivot étant une paire de l'un de la ligne et de la colonne de la matrice de couples, et chaque candidat étant une paire de l'autre de la ligne et de la colonne de la matrice de couples, compatible avec le pivot.

5. Procédé selon la revendication 4, **caractérisé en ce que** sont retirés de l'ensemble de pivots associés chacun à une série de candidats compatibles les pivots et leurs candidats compatibles associés dont le nombre est inférieur à un nombre minimal de requêteurs à l'enregistrement d'informations du pivot considéré.

6. Procédé selon l'une des revendications 4 à 5, **caractérisé en ce que** l'étape c) revient à projeter sur la période de temps prédéterminée les pivots et leurs candidats compatibles associés.

7. Procédé selon l'une des revendications 1 à 6, **caractérisé en ce que**, lors de l'étape d), les groupes potentiellement réalisables sont formés des paires ayant des disponibilités communes dans la période de temps prédéterminée.

8. Procédé selon la revendication 7, **caractérisé en ce que**, pour une offre considérée, les groupes potentiellement réalisables ayant un nombre de paires inférieur à un nombre minimal de requêteurs à l'enregistrement d'informations considéré sont retirés de l'ensemble de groupes potentiellement réalisables.

9. Procédé selon l'une des revendications 1 à 8, **caractérisé en ce que** l'étape e) comporte des sous étapes de :
- Association d'un indice de performance à chacune des paires des groupes potentiellement réalisables ;
- Détermination de l'indice de performance de chaque paire par un solveur à partir d'un ensemble de contraintes prédéfinies ;
- Maximisation des indices de performance déterminés précédemment pour chacun des groupes potentiellement réalisables pour ne conserver que les groupes optimaux.

10. Procédé selon l'une des revendications 1 à 9, **caractérisé en ce que** chaque requêteur est un participant désirant réaliser une activité, chaque requête de l'ensemble de requêtes est une requête de participant et chaque enregistrement d'information de l'ensemble d'enregistrements d'informations est une offre d'activité à réaliser.
